# EUROPEAN PATENT APPLICATION

(11) **EP 1 400 574 A1**
(43) Date of publication of application: **24.03.2004**
(21) Application number: 03255205.1
(22) Date of filing: 22.08.2003
(51) Int. Cl.: C09D 7/00

(54) **Colour changing paint**

(30) Priority: 23.08.2002 GB 0219780
(71) Applicant: Akzo Nobel Decorative Coatings Ltd., Darwen, Lancashire BB3 OBG (GB)
(72) Inventor: Bramley, Christopher Sinjin, Tyne & Wear NE8 1RU (GB)
(74) Representative: Kirkham, Nicholas Andrew

(57) **Abstract**

A composition comprising a paint and a secondary dye, the dye colourant being a first colour when in a liquid phase with the paint and a second colour when in a dried phase with the paint.

## Description

The present invention relates to a composition comprising a paint and a method of painting a wall.

Paints can, of course, be applied to a wide variety of different surfaces such as metal, plaster based walls, plastics, etc. The methods for making suitable paints are well known to those skilled in the art. The present invention is applicable to all types of paint products but in particular to emulsion or aqueous-based wall paints.

When painting a surface it is sometimes important to know whether or not an even and full coat of paint has been applied to a particular area. For example, when applying a second coat to a wall it is often difficult to tell whether or not the second coat has been evenly applied until after the paint dries. This would be particularly useful to a person with visual impairment when painting. This then leads to additional coats being necessary which is wasteful in terms of time and the amount of paint required.

The present invention seeks to provide a composition comprising a paint.

According to a first aspect the present invention there is provided a composition comprising a paint and a secondary dye, the secondary dye being a first colour in a liquid phase with the paint and a second colour in a dry phase with the paint. The addition of the secondary dye into the paint composition allows for obvious visual examination on whether or not a paint coat is being evenly applied even as a top coat over a lower coat which is of the same colour as the dried composition. When the secondary dye changes to another colour in the dried phase, the composition will then be in a finished colour which of course would have to be the desired paint colour.

The secondary dye will often be substantially colourless or white when in said dried phase, thus allowing the paint to provide the finished colour.

The secondary dye will normally be an additive to a base paint which base paint can be prepared by normal methods. Alternatively, the basic paint could be modified such that one of the components of the base paint becomes the secondary dye and this modified component looses its colour as the paint dries. For example, that part of the alkyd monomer dispersed in the paint is coloured and becomes transparent upon polymerisation.

The present invention thus provides a definite cost saving especially in commercial/decoration field. Even if the top coat paint were retailed at a higher price than a conventional paint, the saving in time and material would be demonstrable and not need re-rollering or touching-up.

In a further embodiment, the invention provides a composition wherein the secondary dye reacts with a component of air, e.g. oxygen or CO₂, to form said second colour.

In another embodiment, the invention provides a composition wherein additionally or alternatively the secondary dye is an ionic species with the ion forming said first colour in said liquid phase.

The choice of the additive is, and the chemistry of the colour change is principally constrained by the skilled persons preference and experience. However, the present inventor suggests that indicators, may provide one suitable solution.

Indicator chemistry is well known, for example see Acid-Base Indicators Kolthoff (Macmillan, New York 1937); Kolthoff and Stinger in Volumetric Analysis Vols I and II (Interscience, New York, 2nd Edition, 1942); Bates, Determination of pH (Wiley & Sons, New York, 1954); Bishop, Indicators (Pergamon Press, Oxford, 1972); Green, The Sigma-Aldrich Handbook of Stains, Dyes and Indicators (Aldrich, Milwaukee, Wisconsin, 1990). The choice of secondary dye will also be influenced on the nature of the paint as of course it must not undermine the normal paint finish and qualities. For example, with indicators it may well be necessary to use a secondary additive such as a base e.g. NaOH or an acid in order to cause the necessary colour change.

The preferred indicators are shown in Table 1. The most preferred indicators are those in one of the states the indicator is non-coloured indicated in Table 1 as either the acid colour or the basic colour being C.

Other possible secondary dyes are photo-unstable compounds such that the colour is lost on exposure to light. In some instances this may not be preferred due to loss of colour too quickly in very bright conditions or too slowly when light conditions are poor.

In some circumstances, however this will be preferred. This will be particularly preferred where the compound is a photo-sensitive dye that fades on exposure to a specific frequency of electro-magnetic radiation e.g. UV or infra-red. This would allow intimate and leisurely inspection of the top coat. The surface would then be illuminated with the specific frequency of electro-magnetic radiation once the coating had been fully inspected and passed as fit. The coating with the secondary dye would then be changed to the second colour allowing the composition to have its finished colour. This may be particularly suitable to instances of coating e.g. specialised pipes or the like.

The invention may be provided as an additive and sold separately from a normal paint. The additive would then be added by the consumer if desired for their particular purpose. In these instances it will be important that the paint is compatible with the particular secondary dye, and vice versa.

In some instances clearly a further agent such as clearing additive could be causing the secondary dye to slowly loose its colour from addition of the clearing additive. Alternatively, the clearing additive could be painted onto the dried paint causing a chemical reaction with the secondary dye and lose of colour. However, this is not a preferred method, but it may be useful where a sealing coat or lacquer is applied to the paint surface.

According to a second aspect of the invention there is provided a method of painting a surface comprising the steps of:
a) applying a liquid composition to the surface; and
b) allowing the liquid composition to dry on said surface.

Other uses of the invention would be to provide a photo-sensitive paint that could be used for providing striped or other pattern on the wall and then changed colour when the paint dried. Alternatively, a photo-sensitive paint could be used and an image projected on to it to cause the changing of the fixative agent in particular areas.

Preferred embodiments of the present invention will now be described.

### Example 1

Phenolphthalein solution at pH 9.5 is a red colour but if the solution is dried only white crystals remain. A phenolphthalein solution was thus mixed with white paint Wilkonson Wilko-brand vinyl silk emulsion (Brilliant White) which had been made basic by the addition of NaOH solution. Phenolphthalein was added in an amount of about 0.05% by weight. When added this turned the white paint a bright pink when applied to the wall but when dried is a brilliant white.

### Example 2

The same composition was made as Example 1 except that the secondary dye was changed to thymolphthalein. This shows a bright blue colour when mixed in the liquid phase with the paint and fades to transparent when dry under similar conditions. Thus providing a brilliant finish is the dried phase in brilliant white paint.

Alternatively ammonia or other basic compounds could be used to provide the basic agent. This evaporates rather more quickly from the paint and causes the loss of colour while the paint is still wet. However, in commercial applications it is not imagined that ammonium will provide a suitable secondary additive.

It is preferred if no additional additive has to be used. Thus an indicator or other dye which undergoes colour changes in the normal pH of the paint will often be preferred. For example, quinoline blue changes at pH 7.0-8.0 which is the normal pH of many household emulsion paints. Thus no base would be required.

### Indicators

The following tables list indicators commonly used in acid-base titrimetry for visible end-point determinations. Table 1 lists individual compounds which exhibit a color change over a range of pH values. Table 2 lists mixtures of compounds which exhibit a very sharp color change at a specific pH.

**Table 1**

| Indicator | Chemical name | Acid color¹ | pH range | Basic color¹ | Preparation of stock solution |
|---|---|---|---|---|---|
| methyl violet | mixture of tetra-, penta-, and hexamethyl-*p*-rosaniline hydrochloride salts | Y | 0.15-3.2 | V | 0.01-0.05% in water |
| | | | | | |
| cresol red (acid range) | *o*-cresolsulfonephthalein | R | 0.2-1.8 | Y | Dissolve 100 mg in 2.65ml 0.1*N* NaOH, dil to 100 ml with water |
| | | | | | |
| metanil yellow | 4'-anilinoazobenzene-*m*-sulfonic acid, sodium salt | R | 1.2-2.3 | Y | 0.01-0.1% in water |
| | | | | | |
| *m*-cresol purple (acid range) | *m*-cresolsulfonephthalein | R | 1.2-2.8 | Y | Dissolve 100 mg in 2.65 ml 0.1*N* NaOH, dil to 100ml with water |
| | | | | | |
| xylenol blue (acid range) | *p*-xylenolsulfonephthalein | R | 1.2-2.8 | Y | Dissolve 40 mg in 0.98 ml 0.1*M* NaOH, dil to 100ml with water |
| | | | | | |
| thymol blue (acid range) | thymolsulfonephthalein | R | 1.2-2.8 | Y | Dissolve 100 mg in 2.15 ml 0.1*N* NaOH, dil to 100ml with water |
| | | | | | |
| tropeolin OO | 4'-phenylaminoazobenzene-4-sulfonic acid, sodium salt | R | 1.3-3.2 | Y | 1% in water, 0.4% in 50% aq alc³ |
| | | | | | |
| quinaldine red | 2-(*p*-dimethylaminostyryl)-quinoline ethiodide | C | 1.4-3.2 | R | 0.1% in alc or 90% aq ethanol³ |
| | | | | | |
| α-dinitrophenol | 2,4 dinitrophenol | C | 2.0-4.7 | Y | 0.1% in 70% aq alc³ |
| | | | | | |
| methyl yellow; dimethyl yellow | *p*-dimethylaminoazobenzene | R | 2.9-4.0 | Y | 0.1% in 90% aq alc³ |
| | | | | | |
| bromophenol blue | 3,3',5,5'-tetrabromophenolsulfonephthalein | Y | 3.0-4.6 | Pu | Dissolve 100mg in 1.5ml 0.1*N* NaOH, dil to 100ml with water |
| | | | | | |
| tetrabromophenol blue | tetrabromophenol tetrabromosulfonephthalein | Y | 3.0-4.6 | B | Dissolve 100mg in 1.01ml-0.1*N* NaOH, dil to 100ml with water |
| | | | | | |
| bromochlorophenol blue | 3,3'-dibromo-5,5'-dichlorophenolsulfonephthalein | Y | 3.0-4.6 | Pu | Dissolve 40mg in 0.69 ml 0.1*M* NaOH, dil to 100ml with water |
| | | | | | |
| Congo red | diphenyl-4,4'-bis-(2-azo-1-naphthylamine)sulfonic acid, sodium salt | B | 3.0-5.2 | R | 0.1% in water |
| | | | | | |
| methyl orange | 4'-dimethylaminoazobenzene-4-sulfonic acid, sodium, salt | R | 3.1-4.4, | O | 0.04-0.1% in water |
| | | | | | |
| *p*-ethoxychrysoldine hydrochloride | 4-ethoxy-2',4'-diaminoazobenzene hydrochloride | R | 3.5-5.5 | Y | 0.1% in 90% aq alc³; 0.2% in alc |
| | | | | | |
| naphthyl red | α-naphthylaminoazobenzene | R | 3.7-5.0 | Y | 0.1% in ethanol or 70% aq alc³ |
| | | | | | |
| alizarin sodium sulfonate | dihydroxyanthraquinone sodium sulfonate | Y | 3.7-5.2 | V | 0.1% in water |
| | | | | | |
| bromocresol green | 3,3',5,5'-tetrabromo-*m*-cresolsulfonephthalein | Y | 3.8-5.4 | B | Dissolve 100mg in 1.45 ml 0.1*N* NaOH, dil to 100ml with water |
| | | | | | |
| γ-dinitrophenol | 2,5-dinitrophenol | C | 4.0-5.8 | Y | 0.1% in 70% aq alc³ |
| | | | | | |
| methyl red | 4'-dimethylaminoazobenzene-2-carboxylic acid | R | 4.4-6.2 | Y | Dissolve 100mg in 3.7ml 0.1*N* NaOH, dil to 100ml with water, .1% in alc |
| | | | | | |
| lacmoid | | R | 4.4-6.4 | B | 0.2% in alc |
| | | | | | |
| chlorophenol red | 3,3'-dichlorophenolsulfonephthalein | Y | 4.8-6.4 | Pu | Dissolve 100mg in 235 ml 0.1*N* NaOH, dil to 100ml with water |
| | | | | | |
| benzoyl auramine G | | V | 5-5.6 | Y | 0.25% in methanol |
| | | | | | |
| bromocresol purple | 5,5'-dibromo-o-cresolsulfonephthalein | Y | 5.2-6.8 | Pu | Dissolve 100mg in 1.85 ml 0.1*N* NaOH, dil to 100ml with water |
| | | | | | |
| bromophenol red | 3,3'-dibromophenolsulfonephthalein | Y | 5.2-6.8 | | Dissolve 40mg in 0.78ml 0.1*M* NaOH, dil to 100ml with water |
| bromophenol red | 3,3'-dibromophenolsulfonephthalein | Y | 5.2-6.8 | R | Dissolve 40 mg in 0.78 ml 0.1*M* NaOH, dil to 100ml with water |
| | | | | | |
| *p*-nitrophenol | | C | 5.6-7.6 | Y | 0.1% in water; 0.2% in alc |
| | | | | | |
| bromothymol blue | 3,3'-dibromothymolsulfonephthalein | Y | 6.0-7.6 | B | Dissolve 100mg in 1.6 ml 0.1*N* NaOH, dil to 100ml with water |
| | | | | | |
| phenol red | phenolsulfonephthalein | Y | 6.4-8.2 | R | Dissolve 100mg in 2.85 ml 0.1*N* NaOH, dil to 100ml with water |
| | | | | | |
| rosoblic acid; aurin | *p*-quinonemono(bis-4-oxyphenylmethide) | Y | 6.6-8.0 | R | 0.2% in 50% aq alc³ |
| | | | | | |
| neutral red | 3-amino-6-dimethylamino-2-methylphenazinium chloride | R | 6.8-8.0 | Y | 0.1% in 70% aq alc³ |
| | | | | | |
| quinoline blue | | C | 7.0-8.0 | V | 1% in alc |
| | | | | | |
| cresol red (basic range) | *o*-cresolsulfonephthalein | Y | 7.0-8.8 | R | Dissolve 100 mg in 2.65 ml 0.1*N* NaOH, dil to 100ml with water |
| | | | | | |
| α-naphtholphthalein | | C | 7.3-8.7 | G-B | 0.1% in alc or 70% aq alc³ |
| | | | | | |
| tropeolin OOO; α-naphthol orange | α-naphtholazobenzene-*p*-sulfonic acid, sodium salt | Y | 7.4-8.9 | P | 0.1% in water |
| | | | | | |
| η-cresol purple (basic range) | *m*-cresolsulfonephthalein | Y | 7.4-9.0 | Pu | Dissolve 100 mg in 2.65 ml 0.1*N* NaOH, dil to 100ml with water |
| | | | | | |
| ethyl bis(2,4-dinitrophenyl)acetate | | C | 7.5-9.1 | B | satd soln in 1:1 acetone-alc |
| | | | | | |
| thymol blue (basic range) | thymolsulfonephthalein | Y | 8.0-9.6 | B | Dissolve 100mg in 2.15 ml 0.1*N* NaOH, dil to 100ml with water |
| | | | | | |
| xylenol blue (basic range) | *p*-xylenolsulfonephthalein | Y | 8.0-9.6 | B | Dissolve 40mg in 0.98 ml 0.1*M* NaOH, dil to 100ml water |
| | | | | | |
| *o*-cresolphthalein cresolphthalein | di-*o*-cresolphthalide | C | 8.2-9.8 | R-V | 0.04% in 50% aq alc³ |
| | | | | | |
| phenolphthalein | di-*p*-dioxydiphenylphthalide | C | 8.2-9.8 | P | 0.1% in alc or 60% aq alc³ |
| | | | | | |
| thymolphthalein | dithymolphthalide | C | 9.3-10.5 | B | 0.1% in 80% aq alc³ |
| | | | | | |
| α-naphtholbenzein | dimethylphenolphthalein | Br | 9.8-11.0 | G-B | 0.1% in alc |
| | | | | | |
| alizarin yellow GG; salicyl yellow | 3'-nitro-4-oxyazobenzene-3-carboxylic acid, sodium salt | Y | 10.0-12.1 | Br-Y | 0.1% in ethanol or water |
| | | | | | |
| alizarin yellow R | 4'-nitro-4-oxyazobenzene-3-carboxylic acid, sodium salt | Y | 10.0-12.1 | R | 0.1% in water |
| | | | | | |
| Nile blue | diethylaminonaphthophenazoxonium sulfate | B | 10.1-11.1 | R | 0.1 % in water |
| | | | | | |
| nitramine | 2,4,6-trinitrophenylmethylnitramine | C | 10.8-13.0 | Br | 0.1% in 70% aq alc³ |
| | | | | | |
| tropeolin O | 2',4'-dioxyazobenzene-4-sulfonic acid, sodium salt | Y | 11.0-12.7 | R-Br | 0.1% in water |
| | | | | | |
| Poirrier blue C4B | triphenylrosaniline sulfonic acid, sodium or potassium salt | B | 11.0-13.0 | Pu | 0.1% in water |
| | | | | | |
| indigo carmine | indigotin-5,5-disulfonic acid, disodium salt | B | 11.5-14.0 | Y | 0.25% in 50% aq ethanol³ |
| | | | | | |
| trinitrobenzene | | C | 12.0-14.0 | O | 0.1% in 70% aq alc³ |

**Table 2**

| Composition of indicator stock solution² | Solvent | Acid color¹ | Transition pH | Basic color¹ |
|---|---|---|---|---|
| dimethyl yellow, 0.05% + methylene blue, 0.05% | alc | B-V | 3.25 | G |
| methyl orange, 0.1% + indigo carmine, 0.25% | aq | V | 4.1 | G |
| bromocresol green, sodium salt, 0.05% + methyl orange, 0.01% | aq | O | 4.3 | B-G |
| bromocresol green, 0.075% + methyl red, 0.05% | alc | wine-R | 5.1 | G |
| methyl red, 0.1% + methylene blue, 0.05% | alc | R-V | 5.4 | G |
| bromocresol green, sodium salt, 0.05% + chlorophenol red, sodium salt, 0.05% | aq | Y-G | 6.1 | B-V |
| bromocresol purple, sodium salt, 0.05% + bromothymol blue, sodium salt, 0.05% | aq | Y | 6.7 | V-B |
| neutral red, 0.05% + methylene blue, 0.05% | alc | V-B | 7.0 | G |
| bromothymol blue, sodium salt, 0.05% + phenol red, sodium salt, 0.05% | aq | Y | 7.5 | V |
| cresol red, sodium salt, 0.025% + thymol blue, sodium salt, 0.075% | aq | Y | 8.3 | V |
| phenolphthalein, 0.075% + α-naphtholphthalein, 0.025% | alc | P | 8.9 | V |
| phenolphthalein, 0.075% + thymol blue, 0.025% | 50% alc | Y | 9.0 | V |
| phenolphthalein, 0.05% + thymolphthalein, 0.05% | alc | C | 9.9 | V |
| phenolphthalein, 0.033% + Nile blue, 0.133% | alc | B | 10.0 | R |

| | | | | |
|---|---|---|---|---|
| ¹The indicator colors are abbreviated as follows: B - blue; Br - brown; C - colorless; G - green; O - orange; P - pink; Pu - purple; R - red; V - violet; and Y - yellow. | | | | |
| ²One to five drops of the indicator stock soln should be added to every 10ml soln to be titrated. ³When preparing the aq alc solns, it is important to dissolve the indicator in alc first and then dil with water to the indicated conc. For example, to make a 0.1% soln in 70% aq alc, dissolve 100mg indicator in 70ml alc, then add 30ml water. | | | | |

### References

I M. Kolthoff, *Acid-Base Indicators* (Macmillan, New York, 1937).
I M. Kolthoff, V. A. Stenger, *Volumetric Analysis* vols. I, II (Interscience, New York, 2nd ed., 1942).
R G. Bates, *Determination of pH* (Wiley & Sons, New York,1954).
E. Bishop, *Indicators* (Pergamon Press, Oxford, 1972).
F. J. Green, *The Sigma-Aldrich Handbook of Stains, Dyes, and Indicators* (Aldrich, Milwaukee, Wisconsin, 1990).

## Claims

1. A composition comprising a paint and a secondary dye, the secondary dye being a first colour when in a liquid phase with the paint and a second colour when in a dried phase with the paint.

2. The composition according to claim 1, wherein the secondary dye:
(a) is substantially colourless or white in said dried phase; and/or
(b) reacts with a component if air, e.g. oxygen or CO₂, to form said second colour; and/or
(c) is an ionic species with the ion forming said first colour in said liquid phase; and/or
(d) is an indicator.

3. The composition according to any one of the preceding claims, further including an additive selected to interact with the secondary dye to form the first colour; and optionally wherein the additive is selected from the group consisting of: bases, acids and buffers.

4. The composition according to claim 2, wherein the indicator:
(a) exists as either a protonated or an unprotonated forms, only one of which form is coloured; and/or
(b) is selected from the indicators shown in Table 1; and/or
(c) is selected from the groups consisting of quinaldine red, α-dinitrophenol y-dinitrophenol, p-nitrophenol, quinoline blue, α-naphtholphthalein, ethyl bis(2,4-dinitro-phenyl)acetate, σ-cresolphthalein, phenolphthalein, thymolphthalein, nitramine and trinitrobenzene.

5. The composition according to any one of the preceding claims, wherein the paint is an aqueous-based paint.

6. The composition according to any one of the preceding claims, wherein the secondary dye is substantially colourless when in said dried phase.

7. A method of painting a surface comprising the steps of:
a) applying a liquid composition to the surface; and
b) allowing the liquid composition to dry on said surface;
wherein the composition comprises a composition according to any one of claims 1 to 6.

8. The method of claim 7, wherein the paint dries within 4 hours of the end of step (a).

9. The method of claim 7 or claim 8, wherein the surface is a wall or plaster-based surface.

10. Use of a dye component for forming said secondary dye in a composition according to any one of claims 1 to 7.
